# EUROPEAN PATENT SPECIFICATION

(11) **EP 0 371 659 B1**
(45) Date of publication and mention of the grant of the patent: **19.01.1994**
(21) Application number: 89311894.3
(22) Date of filing: 16.11.1989
(51) Int. Cl.: A23L 1/305, A23L 2/26, A23L 2/38

(54) **Liquid food for suplying protein**
Flüssiges Nahrungsmittel zur Proteinzuführung
Aliment liquide apportant des protéines

(30) Priority: 29.11.1988 JP 299605/88
(43) Date of publication of application: 06.06.1990
(73) Proprietor: NIPPON OIL AND FATS COMPANY, LIMITED, Chiyoda-ku Tokyo (JP); SANWA CHEMICAL LABORATORY CO., LTD., Nagoya-shi Aichi-ken (JP)
(72) Inventor: Tanaka, Yoshiharu, Kawagoe-Shi Saitama-Ken (JP); Iwamura, Sadaaki, Adachi-Ku Tokyo (JP); Sugiura, Naoko, Itabashi-Ku Tokyo (JP); Asai, Hirimoto, Nagoya-Shi Aichi-Ken (JP); Kurachi, Tadashi, Konan-shi Aichi-ken (JP); Kurono, Masayasu, Inabe-gun Mie-ken (JP); Yasui, Bunichiro, Nagoya-shi Aichi-ken (JP); Sawai, Kiichi, Funabashi-shi Chiba-ken (JP)
(74) Representative: Ackroyd, Robert

(56) References cited:
- EP-A- 0 083 327
- EP-A- 0 211 118
- US-A- 2 919 195
- US-A- 3 695 890
- US-A- 3 737 326

## Description

The present invention relates to liquid food for supplying protein which is easily and safely provided for undernourished patients who suffer from hypoproteinemia, hypoalbuminemia and the like or normal healthy people who desire to receive nutritious food and develop their muscles.

Protein is an important nutritive element as an ingredient of body constitutions. People need to take much protein for developing physical strength or for protecting against complications.

However, when protein is supplied by using common foodstuffs to a patient who should take much protein, for example, a patient who suffers from a liver complaint, a patient who needs dialysis of the kidney, etc., he becomes fat or suffers from fatty liver. Accordingly, it is difficult to cure the hypoalbuminemia. Then, in order to efficiently ingest protein only, food for supplying protein has been used in the form of protein materials which can be added to daily meals. On the other hand, a plasma agent is used for a patient who suffers from hypoproteinemia. However, it becomes difficult to use the agent because the agent has many disadvantages, so that it is important to use food for supplying good quality protein.

For the present, several kinds of food for supplying protein such as, for example, milk protein, soybean protein, egg protein or a mixture thereof are available on the market, and most of the food is in the form of powder.

The food for supplying protein is prepared by dissolving in water, milk, juice, etc. or by mixing in a dessert such as, for example, a jelly or custard pudding, or in a meal for giving to a patient.

In such a case, the powder food has the following problems.
a) It is apt to become insanitary.
b) When it is dissolved in water, many bubbles are formed. It is difficult to break and remove the bubbles and these steps are troublesome.
c) As the solution of the powder food is apt to be polluted by bacteria, the solution must be used within a few hours.

For the above reasons, it is desired to obtain a liquid food for supplying protein which is usable as it is.

Furthermore, the protein used in the above liquid food should be highly nutritious. The nutritive value of the protein is determined by the kind of amino acid and quantity thereof which constitute the protein. Protein scores are used for evaluating the nutritive value. Protein scores of several exemplifying kinds of protein are: lactalbumin, 100; egg protein, 100; casein, 91; soybean protein, 60. From these scores, it is understood that lactalbumin and egg protein are highly nutritious.

The liquid food for supplying protein is prepared by liquidizing and sterilizing protein. However, especially when lactalbumin and egg protein are used, the protein is denatured by heating on sterilisation treatment and the protein is coagulated and precipitated. In conventional methods, it is difficult to produce the liquid food for supplying protein having prolonged stability by using highly nutritious lactalbumin or egg protein.

Moreover, as the liquid food for supplying protein is used for oral administration in many cases, it should be tasty. However, protein such as, for example, albumin or casein or a degradation product thereof tastes rough and bitter and changes colour remarkably after sterilising. As a result, it is difficult to use the above conventional liquid food as an oral product.

EP-A-0211118 discloses a homogeneous drinking preparation containing fruit juice and egg, the preparation is formed by treating precipitated egg protein so that it takes the form of finely divided particles evenly dispersed throughout the liquid medium.

US-A-2919195 discloses an acidic fruit juice enriched with protein. A blend of water-dispersible protein selected from casein, milk protein and soy protein and water-soluble nondenatured egg yolk is dispersed in the fruit juice.

As described above, there are therefore problems such that the production of highly nutritious liquid food which is tasteful and can supply protein is difficult.

The present inventors have earnestly strived to resolve these problems. As a result, the inventors devised a liquid food for supplying protein which is highly nutritious and tasteful by using lactalbumin as the protein which is heated so as to be denatured in cloudy conditions.

The present invention thus provides a liquid proteinaceous food comprising lactalbumin, seasonings and/or flavouring material and water, characterised in that lactalbumin having a purity of at least 90% by weight is used in an amount to constituted 5 to 15% by weight of the food and in that the lactalbumin has been dissolved in water at 50°C or below and then heated to 60 to 100°C to denature it in cloudy conditions.

The present invention provides a source of protein for patients who suffer from hypoproteinemia and the like, or for normal healthy persons, and the protein is contained in a liquid food for supplying protein which can be provided conveniently and stably. For these reasons, lactalbumin, having a protein score of 100, is used. However, the protein is flocculated in the heat treatment. The lactalbumin which is obtained by heating to denature in cloudy conditions is, then, used in accordance with the present invention. The lactalbumin which is obtained by heating to denature in cloudy conditions can be prepared by the following treatment steps.

Lactalbumin is dissolved in water at 50°C or less, and the solution obtained is heated at temperatures of 60° to 100°C, preferably 70° to 85°C to denature in cloudy conditions. Many kinds of products which contains pure lactalbumin have come onto the market, but the lactalbumin to be used in accordance with the present invention has a purity of 90% or more. When the lactalbumin having the purity of less than 90% is used, it is coagulated by heating.

The content of the lactalbumin denatured by heating to be used in accordance with the present invention is from 5 to 15% by weight of the feed and the lactalbumin can be used in combination with the other protein. As the other protein, egg protein, milk protein, soybean protein, wheat protein, fish protein, meat protein, gelatin, these degradation products and the like can be exemplified and can be used in combination with one or more kinds of the above protein so as not to reduce the nutritive qualities, preferably in combination with casein which is heat-stable. Preferably the total content of the protein to be used in accordance with the present invention does not exceed 15% by weight. When the content is less than 5% by weight, no sufficient amount of the protein can he provided. When the content is more than 15% by weight, the production of the liquid food becomes difficult.

The food of the present invention can be provided, if necessary, by adding several kinds of vitamins and minerals together with protein. When the liquid food is to be orally administered without being disagreeable to drink, the right proportion of sweetening materials, fruit juice, spices and the like can be added. As the sweetening materials, cane sugar which is a little browned by heating in solution is preferably used; it can be combined with chemical synthetic materials such as, for example, Stevioside, Aspartame and Glycyrrhizin. Phosphates, emulsifiers and the like can be used for dissolving, dispersing and stabilising the protein.

The liquid food for supplying protein of the present invention is prepared by dissolving lactalbumin in water, at 50°C or less, and then by heating the dissolved solution at 60° to 100°C, preferably at 70° to 85°C to obtain a cloudy aqueous solution. Protein other than lactalbumin, seasonings, flavours and the like can be dissolved in the solution, the solution obtained can be sterilised at a high temperature of 100° to 150°C and the sterilised solution is charged into a vessel. As the sterilising means, a common steriliser such as, for example, a retort or an ultrahigh temperature steriliser can be used. The sterilisation conducted by using an ultrahigh temperature instantaneous heater which is of the indirect heating or direct steam heating type is preferably employed. After the sterilisation or before the sterilisation, the food can be homogenised, if necessary.

By using lactalbumin which is obtained by heating lactalbumin to denature in cloudy conditions, the protein can be protected from aggregation by heat treatment in the preparation of the liquid food, and the liquid food for supplying protein can contain lactalbumin of a high nutritive value. Accordingly, the food of the present invention is characterised in that it has high nutritive value and is liquid. It has the following advantages.
a) As the food is liquid, it is unnecessary to dissolve it in a solution and it can be taken as it is without any treatment. It can be easily mixed with milk or concentrated liquid food.
b) After sterilising, the food can be preserved for a long time as it is, and no separation, precipitation or aggregation of the contents of the food is observed.
c) For patients who suffer from hypoproteinemia or hypoalbuminemia and for normal healthy people who need protein, the food, which contains good quality protein can be easily given so as to improve nutrition.

The following examples illustrate the present invention more specifically. In these Examples % is expressed by weight.

### Example 1

A food containing the constituents shown in Table 1 was prepared. Firstly, lactalbumin was added to water and dissolved. The liquid solution was then heated at a temperature of 75°C by means of a heat exchanger of the plate type. The liquid was changed by heating from transparent to opaque and cloudy. Each remaining substance was added and dissolved in the cloudy liquid. The liquid obtained was homogenised at a temperature of about 60°C and a homogenising pressure of 50 kg/cm². The homogenised liquid was treated by means of an ultrahigh temperature instantaneous heat steriliser of the indirect heating type, at a temperature of 135°C for 12 seconds, then at a temperature of 70°C at a homogenising pressure of 100 kg/cm², then the liquid was cooled to 20°C and charged in a sterilised vessel to obtain the liquid feed for supplying protein. The liquid food obtained had a viscosity of 12 cP (at 20°C), a protein content of 10% and a protein score of 100, it was flavoursome and could be used for supplying protein which had good quality. After the liquid food for supplying protein had been allowed to stand over a period of six months at room temperature, no precipitate was observed, and the stability of the food was good.

**Table 1**

| Substance | Amount (kg) |
|---|---|
| Lactalbumin (purity 95%) | 7.37 |
| Sodium caseinate | 3.23 |
| Cane sugar | 6.00 |
| Stevioside | 0.001 |
| Glycyrrhizin | 0.001 |
| Cream flavour | 0.06 |
| Vitamin A | 0.007 |
| Vitamin B₁ | 0.001 |
| Water | 82.790 |

### Example 2

A food having the constituents shown in Table 2 was prepared. Firstly, lactalbumin was added to water and dissolved. The vessel containing the liquid solution was heated at a temperature of 80°C for 15 minutes by supplying steam into the jacket of the vessel. The heated liquid changed from transparent to cloudy. Each remaining substance was added to the cloudy liquid. The liquid obtained was cooled to 65°C and treated at a homogenisation pressure of 100 kg/cm² so as to obtain a homogenised liquid. The homogenised liquid was charged into cans each having a volume of 200 cm³. Each can was sealed and quickly retort-sterilised at 128°C for 7 minutes in an autoclave, and the liquid food for supplying protein was obtained. The liquid food has a viscosity of 8 cP (at 20°C), a protein content of 5.5% and a protein score of 100, and could be used for supplying protein which had good quality. After the liquid food for supplying protein had been allowed to stand over a period of six months at room temperature, no precipitate was observed, and the stability of the food was good.

**Table 2**

| Substance | Amount (kg) |
|---|---|
| Lactalbumin (purity 90%) | 6.1 |
| Cane sugar | 3.0 |
| Honey | 2.0 |
| Milk flavour | 0.4 |
| Vitamin A | 0.007 |
| Vitamin B₂ | 0.001 |
| Water | 88.492 |

### Example 3

A food having the constituents shown in Table 3 was prepared. Firstly, lactalbumin was added to water and dissolved. The liquid solution was then heated at a temperature of 80°C by means of a heat exchanger of the plate type. The liquid was changed from transparent to cloudy. Each remaining substance was added to the cloudy liquid. The liquid obtained was homogenised at a temperature of about 70°C and a homogenising pressure of 200 kg/cm². The homogenised liquid was treated by means of an ultrahigh temperature instantaneous heat steriliser of the direct steam heating type, at a temperature of 140°C for 4 seconds, then at a temperature of 70°C at a homogenising pressure of 50 kg/cm², and the liquid was cooled to 20°C and charged in a sterilised vessel to obtain the liquid food for supplying protein. The liquid food obtained has a viscosity of 15 cP (at 20°C), a protein content of 14% and a protein score of 100. It could be used for supplying protein which had good quality. After the liquid food for supplying protein had been allowed to stand over a period of six months at room temperature, no precipitate was observed, and the stability of the food was good.

**Table 3**

| Substance | Amount (kg) |
|---|---|
| Lactalbumin (purity 95%) | 6.3 |
| Decomposition product of casein | 4.3 |
| Decomposition product of albumen | 4.0 |
| Cane sugar | 5.5 |
| Sodium hexametaphosphate | 0.1 |
| Yogurt flavour | 0.5 |
| Calcium chloride | 0.2 |
| Water | 79.1 |

### Comparative Examples 1, 2 and 3

Using the same treatment process as used in Examples 1, 2 and 3, except that undenature lactalbumin was used instead of the denatured cloudy lactalbumin, the solution of the undenature lactalbumin was treated. The liquid obtained was solidified by the sterilisation step in each Comparative Example.

### Comparative Example 4

Using the same ingredients as shown in Table 1 in Example 1, except that the amount of lactalbumin (purity 95%) was changed to 16.0 kg and the amount of water was changed to 74.16 kg, lactalbumin was added to water and dissolved. The liquid solution was heated by means of a heat exchanger of plate type at 75°C and solidified food was obtained.

## Claims

1. A liquid proteinaceous food comprising lactalbumin, seasonings and/or flavouring material and water, characterised in that lactalbumin having a purity of at least 90% by weight is used in an amount to constitute 5 to 15% by weight of the food and in that the lactalbumin has been dissolved in water at 50°C or below and then heated to 60 to 100°C to denature it in cloudy conditions.

2. A food according to claim 1, in which denaturation has taken place by heating to 70 to 85°C.

3. A food according to claim 1 or 2, containing further protein which comprises one of more of egg protein, milk protein, soybean protein, wheat protein, fish protein, meat protein and gelatin.

4. A food according to claim 3, in which the further protein includes heat-stable casein.

5. A food according to claims 3 or 4, in which the total protein content does not exceed 15% by weight of the food.

6. A food according to any preceding claim, which has been sterilised by heating to 100 to 150°C.

7. A food according to any preceding claim, which has been homogenised.

8. A food according to any preceding claim, in which the lactalbumin is dissolved in water and denatured by heating, prior to the addition of the remaining ingredients of the food.

## Patentansprüche

1. Flüssiges, proteinhaltiges Nahrungsmittel, bestehend aus Lactalbumin, Gewürzen und/oder Geschmacksstoffen und Wasser, dadurch gekennzeichnet, daß ein Lactalbumin, welches eine Reinheit von wenigstens 90 Gew.-% aufweist, in einer Menge benutzt wird, welche 5 Gew.-% bis 15 Gew.-% des Nahrungsmittels ausmacht und daß das Lactalbumin in Wasser bei 50° C oder darunter gelöst und anschließend auf 60° C bis 100° C augeheizt wird, um zu einem trüben Zustand denaturiert zu werden.

2. Nahrungsmittel nach Anspruch 1, dadurch gekennzeichnet, daß die Denaturierung durch Aufheizung auf 70° C bis 85° C durchgeführt wird.

3. Nahrungsmittel nach Anspruch 1 oder 2, welches weiteres Protein enthält, welches eines oder mehrere der aus Eiprotein, Milchprotein, Sojabohnenprotein, Weizenprotein, Fischprotein, Fleischprotein und Gelatine bestehenden Gruppe umfaßt.

4. Nahrungsmittel nach Anspruch 3, wobei das weitere Protein ein wärmebeständiges Kasein ist.

5. Nahrungsmittel nach Anspruch 3 oder 4, wobei der gesamte Proteingehalt 15 Gew.-% des Nahrungsmittels nicht übersteigt.

6. Nahrungsmittel nach einem der vorangegangenen Ansprüche, welches mittels einer Beheizung auf 100° C bis 150° C sterilisiert worden ist.

7. Nahrungsmittel nach einem der vorangegangenen Ansprüche, welches homogenisiert worden ist.

8. Nahrungsmittel nach einem der vorangegangenen Ansprüche, wobei das Lactalbumin in Wasser gelöst und durch Beheizung denaturiert ist, und zwar vor der Hinzufügung der verbleibenden Bestandteile des Nahrungsmittels.

## Revendications

1. Aliment liquide riche en protéines comprenant de la lactalbumine, des assaisonnements et/ou des agents aromatiques et de l'eau, caractérisé en ce qu'une lactalbumine ayant un taux de pureté d'au moins 90 % en poids est utilisée en quantité telle pour constituer 5 à 15 % en poids de l'aliment et en ce que la lactalbumine a été dissoute dans de l'eau à 50°C ou moins et chauffée par la suite jusqu'à 60 à 100°C afin d'être dénaturée en prenant un aspect trouble.

2. Aliment selon la revendication 1, dans lequel la dénaturation est accomplie par chauffage entre 70 et 85°C.

3. Aliment selon les revendications 1 ou 2, contenant des protéines supplémentaires comprenant une ou plusieurs protéines provenant d'oeuf, de lait, de soja, de blé, de poisson, de viande et de gélatine.

4. Aliment selon la revendication 3, dans lequel la protéine supplémentaire comprend une caséine stable à la chaleur.

5. Aliment selon les revendications 3 ou 4, dans lequel la teneur totale en protéines ne dépasse pas 15% en poids de celui-ci.

6. Aliment selon l'une quelconque des revendications précédantes, qui a subi une stérilisation par chauffage entre 100 et 150°C.

7. Aliment selon l'une quelconque des revendications précédantes, qui a subi une homogénéisation.

8. Aliment selon l'une quelconque des revendications précédantes, dans lequel la lactalbumine a été dissoute dans de l'eau et dénaturée par chauffage, préalablement à l'addition du reste des ingrédients de celui-ci.
